Europäisches Patentamt

European Patent Office

Office européen des brevets

(19)

(11) Veröffentlichungsnummer: **0 017 619**
**B1**

(12) ## EUROPÄISCHE PATENTSCHRIFT

(45) Veröffentlichungstag der Patentschrift:
30.05.84

(21) Anmeldenummer: 80810100.0

(22) Anmeldetag: 24.03.80

(51) Int. Cl.³: **B 60 B 3/06**, B 60 B 1/08

(54) Fahrzeugrad und Verfahren zur Herstellung desselben.

(30) Priorität: 06.04.79 CH 3261/79

(43) Veröffentlichungstag der Anmeldung:
15.10.80 Patentblatt 80/21

(45) Bekanntmachung des Hinweises auf die Patenterteilung:
30.05.84 Patentblatt 84/22

(84) Benannte Vertragsstaaten:
CH DE FR IT NL

(56) Entgegenhaltungen:
DE - A - 2 026 709
DE - C - 400 764
US - A - 3 484 137

(73) Patentinhaber: Schweizerische Aluminium AG,
CH-8212 Neuhausen am Rheinfall (CH)

(72) Erfinder: Hardt, Jean, Neusatzstrasse, CH-8463 Benken
(CH)
Erfinder: Maier, Jörg, Bellebern 16, D 7707 Engen (DE)
Erfinder: Zulauf, Herbert, Kirchweg 47,
CH-8245 Feuerthalen (CH)
Erfinder: Widrig, Jakob, Ginsterweg 20,
CH-8400 Winterthur (CH)

## Beschreibung

Die Erfindung bezieht sich auf ein Fahrzeugrad, welches aus einem mit einer Felge formschlüssig verbundenen Radkörper besteht und der Verwendung für Personenkraftwagen, Lastkraftwagen oder motorgetriebenen Zweiradfahrzeugen dient sowie weiterhin auf ein Verfahren zur Herstellung desselben.

Bekannt ist beispielsweise die Verbindung von Felge und Radkörper mit Hilfe von Schrauben oder Nieten oder durch Schweissen oder Kleben. Den hohen Anforderungen an das dekorative Aussehen eines Fahrzeugrades sowie an erforderliche Toleranzen und die Dichtheit für den Einsatz des Rades bei schlauchlosen Reifen kann in vielen Fällen bei der Anwendung der bekannten, vorerwähnten Verbindungsarten nicht entsprochen werden.

Es ist auch bekannt, den Radkörper und die Felge in einer anderen Weise mit Hilfe von Diffusionsschichten zu verbinden. Hierbei erreicht man eine gute Haftung. Andererseits besteht jedoch das Risiko des Abschälens infolge der aus dem sogenannten Schwinden herrührenden, nicht vollständig vermeidbaren Spannungen. Nachteilig ist jedoch auch der verhältnismässig grosse erforderliche Aufwand bei der Anwendung des vorbeschriebenen Verfahrens zum Verbinden der betreffenden Teile.

Stand der Technik ist der Einsatz von Fahrzeugrädern aus reinem Halbzeug, wodurch preisgünstige Teile mit hoher Zähigkeit, jedoch eingeschränkter Gestaltungsmöglichkeit entstehen, sowie der Einsatz von gegossenen Rädern, deren Preis im Vergleich zum vorgenannten Rad hoch, die Gestaltungsmöglichkeit besser, die Zähigkeit geringer ist.

Nachteilig war bei solchen bisher bekannten Fahrzeugrädern bisher die Anwendung von besonderen Verbindungselementen zum Verbinden von Felge und Radkörper, wie Radschlüssel oder ein Radstern, mit Hilfe von Schrauben oder Nieten sowie die Anwendung von Schweissverfahren oder der vorbeschriebenen Diffusionsschichten, da derartige Verbindungen einerseits das Aussehen des Fahrzeugrades sehr beeinträchtigen und andererseits in vielen Fällen, wie beispielsweise bei Speichenrädern (vorgetäuschte Speichen), verhältnismässig aufwendig sind.

Bekannt sind weiterhin gegossene Räder, deren Herstellungskosten wegen des in den meisten Fällen verhältnismässig grossen Aufwandes für die Giessformen im Vergleich zu den vorbezeichneten Rädern sehr hoch ist. Vorteilhaft ist hierbei im Vergleich zu den vorerwähnten Rädern die Gestaltungsmöglichkeit, jedoch ist die Zähigkeit derselben geringer. Ausserdem ist bei der Herstellung solcher Räder mit verhältnismässig hohen Ausschussquoten zu rechnen.

Aus der DE-C-400764 ist auch ein Rad bekannt, welches aus einem Eisenreifen und einem in ihm eingegossenen Radkörper besteht und so eine formschlüssige Verbindung hergestellt ist.

Der vorliegenden Erfindung liegt nunmehr die Aufgabe zugrunde, ein Fahrzeug sowie ein Verfahren zur Herstellung desselben zu schaffen, welches einerseits bei einem verhältnismässig geringen Aufwand an konstruktiven Mitteln preisgünstig herzustellen ist und andererseits ein dekoratives Aussehen sowie eine hohe Zähigkeit besitzt und leicht ist.

Erfindungsgemäss wird die Aufgabe dadurch gelöst, dass entweder die Felge oder der Radkörper aus einem Strangpressprofil oder einem Walzprofil gebildet ist und dass das andere Radteil (Radkörper bzw. Felge) daran angegossen ist.

Das Verfahren zur Herstellung des Fahrzeugrades ist dadurch gekennzeichnet, dass

a) eines der beiden aus einem Strangpressprofil oder aus einem Walzenprofil gebildeten vorgefertigten Radteile, wie die Felge einerseits und der Radkörper andererseits in eine Giessform eingesetzt wird, und dass

b) in eine so vorbereitete Giessform eine Metallschmelze zur Herstellung des zweiten Radteiles, wie eines Radkörpers einerseits und einer Felge andererseits, und zur Verbindung des einen Radteiles mit dem anderen vorgefertigten Radteil eingegossen wird.

Weitere vorteilhafte Ausführungsformen des Fahrzeugrades sowie Ausführungen über das Herstellungsverfahren sind aus der nachfolgenden Beschreibung zu entnehmen.

Die Zeichnung zeigt sechs Ausführungsbeispiele des Erfindungsgegenstandes in vereinfachter Darstellungsweise, und zwar:

Fig. 1 einen teilweisen Querschnitt durch ein Fahrzeugrad für Personenkraftwagen oder Lastkraftwagen gemäss einem ersten Ausführungsbeispiel,

Fig. 2 einen Querschnitt durch ein Strangpressprofil, aus welchem die Felge des in der Fig. 1 gezeigten Fahrzeugrades gefertigt worden ist.

Fig. 3 einen teilweisen Querschnitt durch ein Fahrzeugrad für Personenkraftwagen oder Lastkraftwagen gemäss einem zweiten Ausführungsbeispiel,

Fig. 4 einen Querschnitt durch ein Strangpressprofil, aus welchem die Felge des in der Fig. 3 gezeigten Fahrzeugrades gefertigt worden ist.

Fig. 5 einen teilweisen Querschnitt durch ein Fahrzeugrad für Personenkraftwagen oder Lastkraftwagen gemäss einem dritten Ausführungsbeispiel,

Fig. 6 einen Querschnitt durch ein Strangpressprofil, aus welchem die Felge des in der Fig. 5 gezeigten Fahrzeugrades gefertigt worden ist,

Fig. 7 eine teilweise Seitenansicht auf ein Fahrzeugrad gemäss einem vierten Ausführungsbeispiel mit einem aus einem Strangpressprofil gefertigten Radstern und mit einer denselben formschlüssig umgreifenden, gegossenen Felge,

Fig. 8 einen Querschnitt durch das in der Fig. 7 gezeigte Fahrzeugrad gemäss der Linie XIII-XIII in der Fig. 7,

Fig. 9 einen teilweisen Querschnitt durch ein Fahrzeugrad für ein motorgetriebenes Zweiradfahrzeug gemäss einem fünften Ausführungsbeispiel,

Fig. 10 einen Querschnitt durch ein Strangpressprofil, aus welchem die Felge des in der Fig. 9 gezeigten Fahrzeugrades gefertigt worden ist,

Fig. 11 einen teilweisen Querschnitt durch ein Fahrzeugrad für ein motorgetriebenes Zweiradfahrzeug gemäss einem sechsten Ausführungsbeispiel,

Fig. 12 einen Querschnitt durch ein erstes, fertig ausgeformtes Strangpressprofil, aus welchem die Felge des in der Fig. 11 gezeigten Fahrzeugrades gefertigt worden ist, und

Fig. 13 einen Querschnitt durch ein zweites Strangpressprofil für die Felge des in der Fig. 11 dargestellten Fahrzeugrades, bei welchem jedoch im Vergleich zu dem in der Fig. 12 gezeigten Strangpressprofil besondere Walz- und Rollvorgänge zur Ausformung des gewünschten Felgenprofiles erforderlich sind.

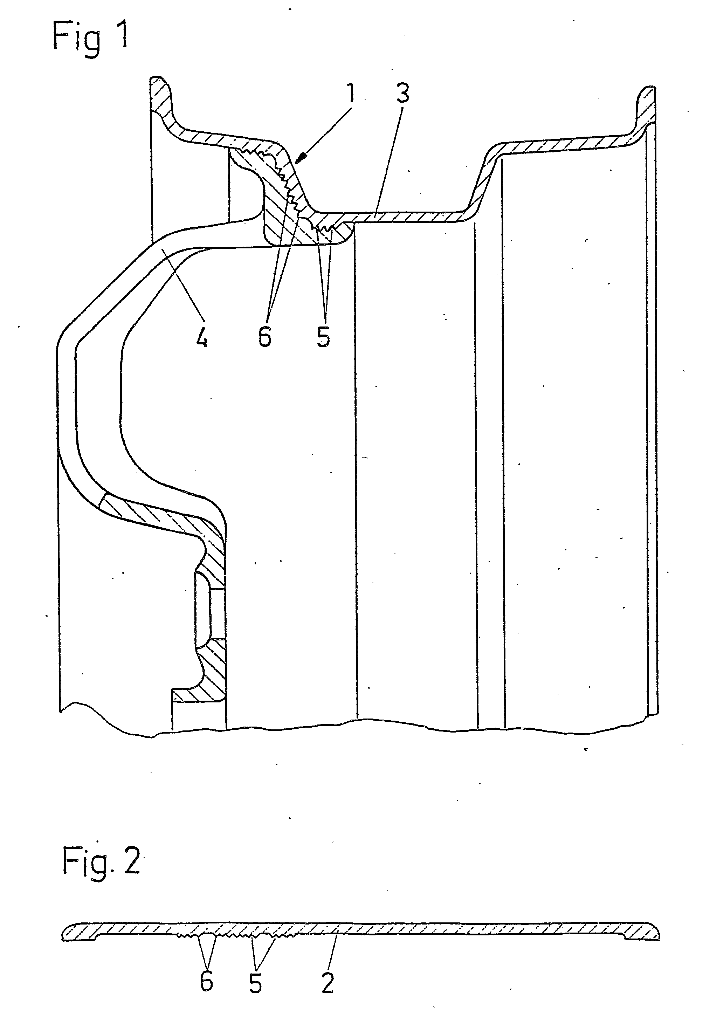

Das in den Figuren 1 und 2 gemäss dem ersten Ausführungsbeispiel gezeigte Fahrzeugrad 1 weist eine aus einem Walz- und Strangpressprofil 2 gefertigte Felge 3 auf, welche formschlüssig mit einem gegossenen Radkörper bzw. mit einer Radschüssel 4 verbunden ist.

Das Walz- oder Strangpressprofil 2 der Felge 3 ist auf einer Seite mit in Längsrichtung verlaufenden Rillen 5 und Zähnen 6 versehen. Zur Herstellung einer Felge 3 wird das Strangpressprofil auf einer vorbestimmten Länge entsprechend der Grösse des Rades durchtrennt und anschliessend in bekannter Weise mit Hilfe von Rollen und Walzen in eine kreisrunde Form verbracht. Hierbei wird gleichzeitig die endgültige Form der Felge bzw. diejenige des Felgenbettes und der Felgenschultern erhalten. Nach der erfolgten Umformung werden die beiden Enden des Strangpressprofiles 2 stumpf miteinander verschweisst.

Anschliessend wird die Felge 3 in bevorzugter Weise in einem vorgewärmten Zustand in eine nicht näher dargestellte Gussform zum Ausgiessen einer Radschüssel 4 eingesetzt und in der Form derart ausgegossen, dass zwischen den Rillen 5 und den Zähnen 6 der Felge 3 einerseits und dem äusseren Umfang der Radschüssel 4 andererseits eine formschlüssige Verbindung entsteht. Beim Eingiessen in die Form fliesst das schmelzflüssige Metall in die auf der Innenseite der Felge 3 angeordneten Rillen 5, wodurch die Radschüssel 4 nach dem Erkalten des Gussmetalls unlösbar fest mit der vorgefertigten Felge 3 verbunden ist.

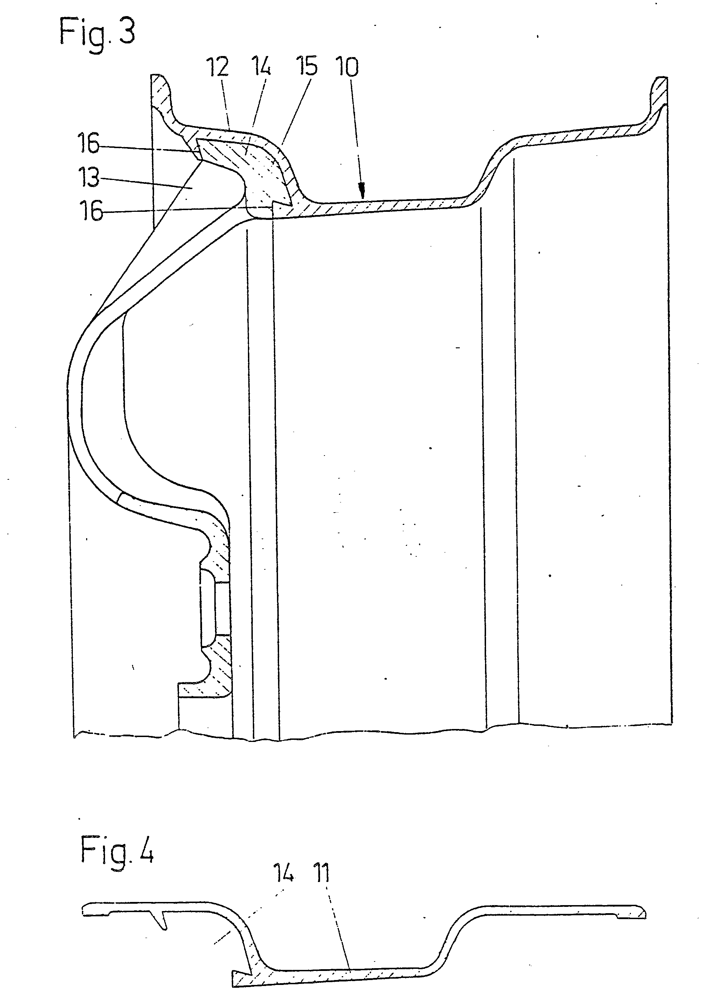

Die weiterhin in den Figuren 3 und 4 sowie 5 und 6 gezeigten beiden Ausführungsbeispiele zwei und drei eines Fahrzeugrades für Personenkraftwagen unterscheiden sich im Aufbau nur unwesentlich von dem vorbeschriebenen ersten Ausführungsbeispiel.

Das in den Figuren 3 und 4 gezeigte zweite Ausführungsbeispiel eines Fahrzeugrades 10 unterscheidet sich von dem vorbeschriebenen ersten Ausführungsbeispiel lediglich in der Ausbildung des stranggepressten Profiles 11 der Felge 12, in welche die Radschüssel 13 in der gleichen Weise wie beim ersten Ausführungsbeispiel eingegossen worden ist.

Das wie bei dem vorbeschriebenen ersten Ausführungsbeispiel zu einer Felge 12 verarbeitete stranggepresste Profil 11 weist auf einer Seite desselben eine hinterschnittene Nut 14 auf, welche an der fertiggestellten Felge ringförmig verläuft.

Die Herstellung der Radschüssel 13 sowie die formschlüssige Verbindung derselben mit der Felge 12 erfolgt in der gleichen Weise wie bei dem vorbeschriebenen ersten Ausführungsbeispiel des Fahrzeugrades 1 durch Eingiessen von schmelzflüssigem Metall in eine entsprechend der Form der Radschüssel 13 ausgebildete Giessform.

Nach dem Erkalten der gegossenen Radschüssel 13 können gegebenenfalls zwischen den Wandungen der ringförmigen Nut 14 der Felge 12 und dem eingegossenen umfänglichen Rand 15 der Radschüssel 13 durch Schwindung des Gussteiles bzw. der Radschüssel Spalten entstehen, welche durch bekannte, geeignete Dichtungs- oder Klebemassen 16 verschlossen werden.

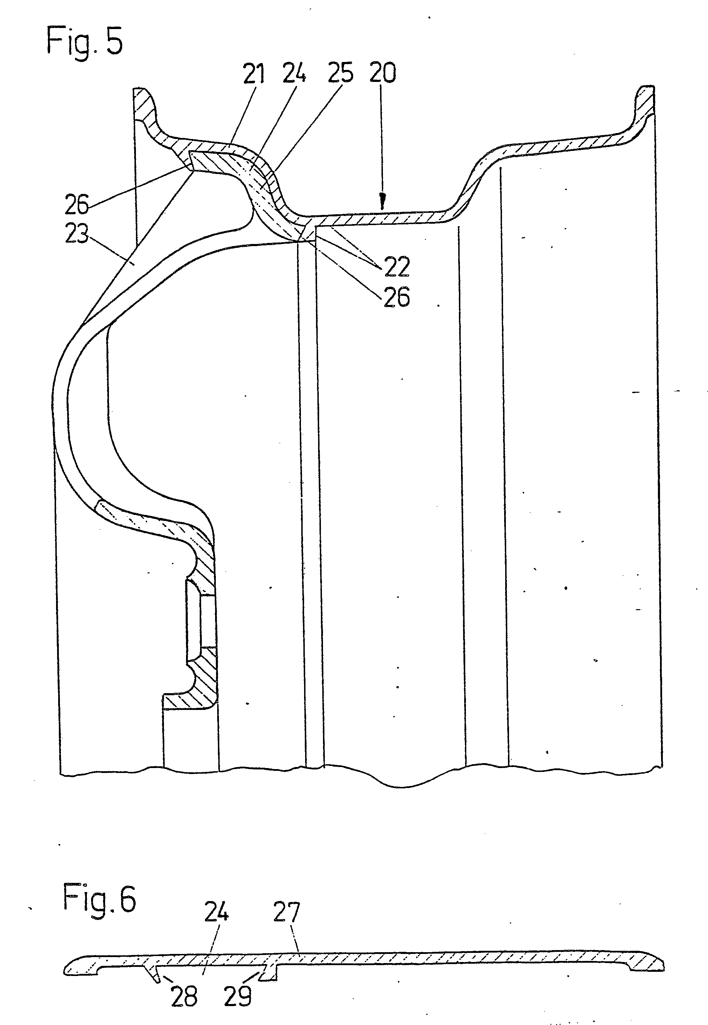

Bei dem in den Figuren 5 und 6 gezeigten dritten Ausführungsbeispiel eines Fahrzeugrades 20 für Personenkraftwagen ist die Felge 21 im Vergleich zur Felge 12 des vorbeschriebenen zweiten Ausführungsbeispieles mit einem ringförmigen Absatz 22 versehen worden, wodurch mehr Raum für die Anordnung bzw. Unterbringung von Bremsorganen gewonnen wird.

Die Herstellung des Fahrzeugrades 20 wird in der gleichen Weise wie beim Fahrzeugrad 1 des vorbeschriebenen ersten Ausführungsbeispieles bewerkstelligt und bedarf daher keiner näheren Erläuterung. Die Felge 21 ist in der gleichen Weise wie beim vorbeschriebenen ersten Ausführungsbeispiel aus einem Strangpressprofil 27 gefertigt worden, welches auf einer Seite eine Nut 24 mit zwei Hinterschneidungen 28 und 29 aufweist.

Nach dem Erkalten der gegossenen Radschüssel 23 können gegebenenfalls zwischen den Wandungen der ringförmigen Nut 24 der Felge 21 und dem eingegossenen umfänglichen Rand 25 der Radschüssel 23 durch Schwindung des Gussteiles bzw. der Radschüssel Spalten entstehen, welche durch bekannte, geeignete Dichtungs- oder Klebemassen (26) verschlossen werden.

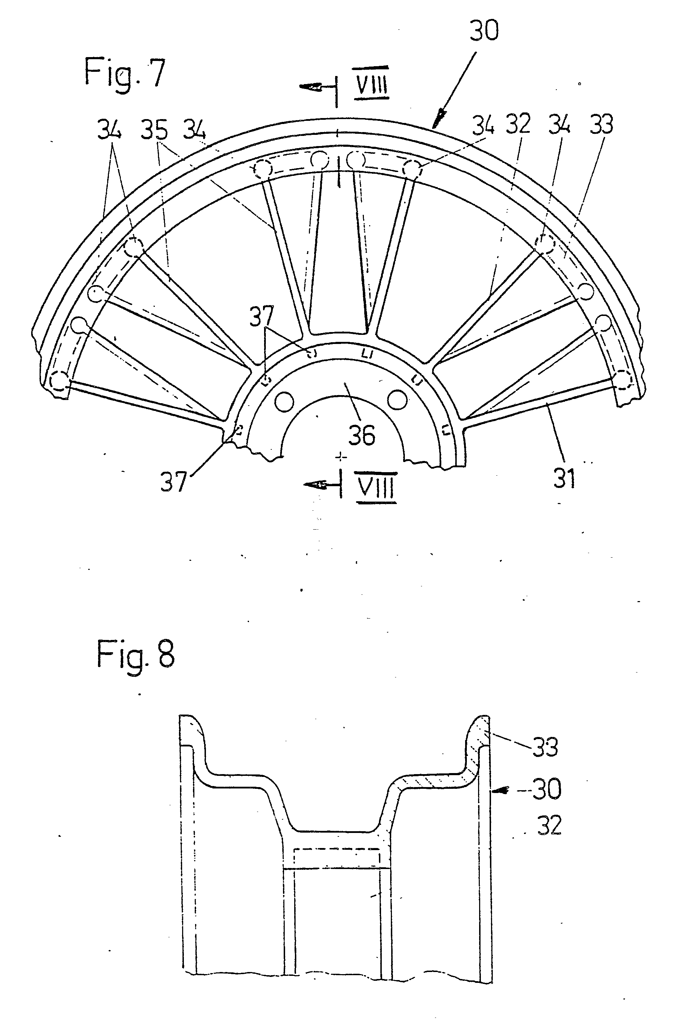

Gemäss dem in den Figuren 7 und 8 gezeigten vierten Ausführungsbeispiel eines Fahrzeugrades 30 besteht der Radkörper 31 aus einem stranggepressten, sternenförmigen Profil 32. Zur Herstellung des Fahrzeugrades wird der Radstern in einem vorgewärmten Zustand zunächst in eine nicht näher dargestellte Giessform zum Ausgiessen einer Felge 33 und einer Nabe 36 eingesetzt. Anschliessend wird die Felge in der Giessform derart ausgegossen, dass dieselbe die äusseren Enden 34 des sternenförmigen Radkörpers 31 formschlüssig umgreifen. Die einzelnen speicherartigen Stege 35 können vor dem Giessen, wie in der Fig. 7 dargestellt, schräg zur Radachse gebogen sein, wenn dies erwünscht ist. Bezüglich der in diesem Beispiel gemeinsam mit der Felge 33 gegossenen Nabe 36 ist besonders darauf hinzuweisen, dass die Nabe 36 in der gleichen Weise wie die Felge formschlüssig mit Stegen 37 des Radkörpers 31 verbunden ist. Im Sinne der Erfindung kann sebstverständlich auch auf das Ausgiessen einer mit dem Radkörper verbundenen Nabe verzichtet werden, wenn dieses erwünscht ist.

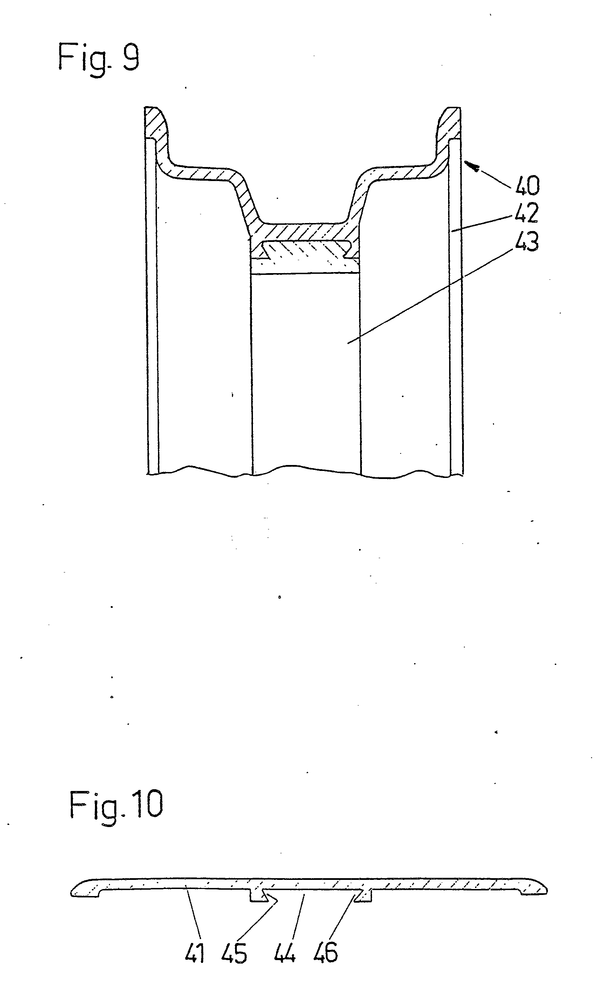

Das gemäss einem fünften Ausführungsbeispiel in den Figuren 9 und 10 gezeigte Fahrzeugrad 40, welches im wesentlichen der Verwendung an motorgetriebenen Zweiradfahrzeugen dient, weist eine aus einem Strangpressprofil 41 gefertigte Felge 42 auf, welche formschlüssig mit einem gegossenen Radkörper bzw. mit einem Radstern 43 verbunden ist.

Das Strangpressprofil 41 der Felge 42 weist im mittleren Bereich auf einer Seite derselben eine Nut 44 auf, welche auf jeder Seite mit einer Hinterschneidung 45 bzw. 46 versehen ist.

Die Herstellung der Felge 42 aus dem Strangpressprofil 41 entspricht im wesentlichen der Herstellungsweise der Felge 3 des Fahrzeugrades 1 gemäss dem vorbeschriebenen ersten Ausführungsbeispiel. Die so hergestellte Felge 42 wird in einer nicht dargestellten Giessform zum Ausgiessen des Radkörpers 43 bzw. eines Radsternes eingesetzt und in der Form derart ausgegossen, dass die Metallschmelze den Innenraum der Nut 44 der Felge 42 vollständig ausfüllt, und dass entsprechend der Ausbildung der Form der Radkörper 43 bzw. der Radstern entsteht. Der sternförmige Radkörper 43 ist an seinem Umfang durch den Giessvorgang unlösbar fest mit der vorgefertigten Felge 42 verbunden.

In einer anderen vorteilhaften Weise können sowohl die Felge 42 als auch der sternförmige Radkörper 43 aus einem Strangpressprofil hergestellt und, wie in der Fig. 9 dargestellt, formschlüssig miteinander verbunden sein. Um die Felge gegenüber dem Radkörper zu fixieren, können am Umfang des Radkörpers beispielsweise in radialer Richtung Gewindebohrungen angeordnet sein, in welche stiftförmige Spann- und/oder Feststellschrauben einschraubbar sind.

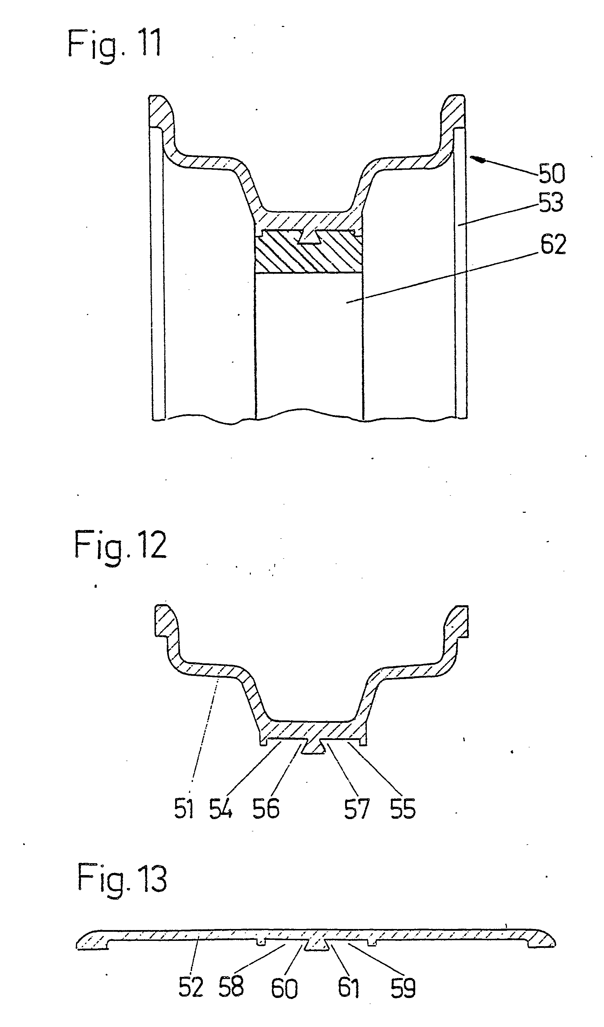

Das gemäss dem sechsten Ausführungsbeispiel in den Figuren 11, 12 und 13 mit Einzelteilen dargestellte Fahrzeugrad 50 dient im wesentlichen der Verwendung an motorgetriebenen Zweiradfahrzeugen, obwohl das Fahrzeugrad auch für Personenkraftfahrzeuge zur Anwendung gelangen kann, wenn dieses erwünscht ist.

Das Fahrzeugrad 50 weist eine aus jeweils einem Strangpressprofil 51 oder 52 gefertigte Felge auf, welche je nach den gegebenen Fertigungsmöglichkeiten zur Anwendung gelangt.

Das in der Fig. 12 dargestellte Strangpressprofil 51 ist bereits entsprechend dem gewünschten Felgenprofil fertig ausgeformt, während im Vergleich hierzu das in der Fig. 13 gezeigte Strangpressprofil 52 im Querschnitt flach ausgebildet ist und besonderer Walz- und Rollvorgänge zur Ausformung des gewünschten Felgenprofiles bedarf. Nach der erfolgten Ausrundung der Strangpressprofile 51 oder 52 werden die beiden Enden der Strangpressprofile 51 oder 52 stumpf miteinander verschweisst.

Die Strangpressprofile 51 oder 52 weisen jeweils in ihrem mittleren Bereich auf einer Seite jeweils zwei Nuten mit je einer Hinterschneidung auf, und zwar das Strangpressprofil 51 die beiden Nuten 54 und 55 mit je einer Hinterschneidung 56 und 57 und das Strangpressprofil 52 die beiden Nuten 58 und 59 mit je einer Hinterschneidung 60 und 61.

Die fertiggestellte Felge 53 wird, wie gemäss dem vorbeschriebenen ersten Ausführungsbeispiel, in eine Giessform zum Ausgiessen eines Radkörpers bzw. Radsternes 61 und zur Herstellung einer formschlüssigen Verbindung zwischen der Felge 53 und dem Radstern 62 eingesetzt.

Nach dem Erkalten des gegossenen Radsternes 61 können gegebenenfalls zwischen den Wandungen der ringförmigen Nuten 54 und 55 bzw. 58 und 59 der Felge 53 durch Schwindung des Gussteiles bzw. des Radsternes 62 Spalten entstehen, welche durch bekannte, geeignete Dichtungs- oder Klebemassen 63 verschlossen werden.

Das Giessen des Radkörpers, der Felge und/oder der Nabe kann entsprechend den zur Verfügung stehenden Giessanlagen nach dem sogenannten Kokillengussverfahren, dem Niederdruckgussverfahren, dem Druckgussverfahren erfolgen oder nach dem Flüssigkeitspress-Giessverfahren (Squeeze-Casting). Bei der Anwendung des Druckgussverfahrens können zur Verminderung der durch das sogenannte Schwinden des Gussteiles bzw. des Radkörpers entstehenden Spannungen am Felgenteil radial wirksame, unter hydrostatischem Druck befindliche, nicht dargestellte Anschläge angeordnet sein, durch welche das vorgefertigte Felgenteil aufgeweitet wird.

Für die Herstellung der Felge gelangt ein zähes Knetmetall, wie zum Beispiel Stahl, Aluminium, eine Aluminiumlegierung oder eine Magnesiumlegierung zur Anwendung. Der Radkörper, wie eine Radschüssel oder ein Radstern, bestehen vorzugsweise aus einer Aluminium- oder einer Magnesiumlegierung.

Die Erfindung ist nicht auf die vorbeschriebenen sechs Ausführungsbeispiele eines Fahrzeugrades beschränkt. Im Sinne der Erfindung ist es beispielsweise auch möglich, andere Ausgestaltungen des Radkörpers und/oder der Felge vorzunehmen, wenn dieses erwünscht ist. Das erfindungsgemäss ausgebildete Fahrzeugrad eignet sich besonders gut für die Massenfertigung und entspricht hohen Qualitätsanforderungen.

**Patentansprüche**

1. Fahrzeugrad (1, 10, 20, 30, 40 bzw. 50), welches aus einem mit einer Felge (3, 12, 21, 33, 42 bzw. 53) formschlüssig verbundenen Radkörper (4, 13, 23, 31, 43 bzw. 62) besteht und der Verwendung für Personenkraftwagen, Lastkraftwagen oder motorgetriebenen Zweiradfahrzeugen dient, dadurch gekennzeichnet, dass entweder die Felge (3, 12, 21, 33, 42 bzw. 53) oder der Radkörper (4, 13, 23, 31, 43 bzw. 62) aus einem Strangpressprofil oder einem Walzprofil gebildet ist, und dass das andere Radteil (Radkörper bzw. Felgen) daran angegossen ist.

2. Fahrzeugrad nach dem Anspruch 1, dadurch gekennzeichnet, dass die Felge (3, 12, 21, 42 oder 53) aus einem Strangpressprofil (2, 11, 27, 41, 51 oder 52) hergestellt worden ist, welches auf einer Seite mindestens eine in Längsrichtung verlaufende nutenförmige Vertiefung (5, 14, 24, 44, 54 und 57 oder 58 und 59) besitzt.

3. Fahrzeugrad nach dem Anspruch 1, dadurch gekennzeichnet, dass die Felge (3, 12, 21, 42 oder 53) aus einem bandförmigen Walzmaterial hergestellt worden ist, welches auf einer Seite mindestens eine in Längsrichtung verlaufende nutenförmige Vertiefung (5, 14, 24, 44, 54 und 57 oder 58 und 59) besitzt.

4. Fahrzeugrad nach Anspruch 2 oder 3, dadurch gekennzeichnet, dass die nutenförmigen Vertiefungen (5, 14, 24, 44, 54 und 57 oder 58 und 59) Hinterschneidungen haben.

5. Fahrzeugrad nach Anspruch 2, dadurch gekennzeichnet, dass das der Herstellung der Felge (3, 12, 21, 42 oder 53) dienende Strangpressprofil aus einem zähen Knetmetall, wie einer Aluminiumlegierung oder einer Magnesiumlegierung besteht.

6. Fahrzeugrad nach Anspruch 1, dadurch gekennzeichnet, dass die Felge (33) aus einem Gussmetall hergestellt worden ist.

7. Fahrzeugrad nach den Ansprüchen 1 und 6, dadurch gekennzeichnet, dass das der Herstellung der Felge (33) dienende Gussmetall aus einer Aluminiumlegierung oder einer Magnesiumlegierung besteht.

8. Fahrzeugrad nach Anspruch 1, dadurch gekennzeichnet, dass der Radkörper (4, 13, 23, 43 und 62) aus einem Gussmetall besteht.

9. Fahrzeugrad nach den Ansprüchen 1 und 8, dadurch gekennzeichnet, dass das Gussmetall aus einer Aluminiumlegierung oder aus einer Magnesiumlegierung besteht.

10. Fahrzeugrad nach Anspruch 1, dadurch gekennzeichnet, dass der Radkörper (31) des Fahrzeugrades (30) aus einem Strangpressprofil besteht.

11. Fahrzeugrad nach den Ansprüchen 1 und 10, dadurch gekennzeichnet, dass das der Herstellung des Radkörpers (31) des Fahrzeugrades (30) dienende Strangpressprofil aus einem zähen Knetmetall, wie einer Aluminiumlegierung oder einer Magnesiumlegierung besteht.

12. Fahrzeugrad nach Anspruch 1, dadurch gekennzeichnet, dass gegebenenfalls die beim Schwinden des gegossenen Radkörpers (4, 13, 23, 43 und 62) zwischen den Wandungen der Vertiefungen der Felge und dem in den Vertiefungen formschlüssig verankerten Radkörper entstehenden Spalten mit einer Klebe- oder Dichtungsmasse verschlossen sind.

13. Fahrzeugrad nach den Ansprüchen 1, 2 und 10, dadurch gekennzeichnet, dass sowohl der Radkörper (31 oder 43) des Fahrzeugrades (30 oder 40) als auch Felgen (33 oder 42) derselben aus einem Strangpressprofil hergestellt sein können.

14. Verfahren zur Herstellung eines Fahrzeugrades nach dem Anspruch 1, dadurch gekennzeichnet, dass

a) eines der beiden aus einem Strangpressprofil (2, 11, 27, 31, 41 oder 52) oder aus einem Walzenprofil gebildeten, vorgefertigten Radteile, wie die Felge einerseits und der Radkörper andererseits in eine Gussform eingesetzt wird, und dass

b) in eine so vorbereitete Gussform eine Metallschmelze zur Herstellung des Radteiles (4, 13, 23, 33, 43 oder 62), wie der Felge einerseits und des Radkörpers andererseits, und zur Verbindung dieses zweiten Radteiles mit dem vorgefertigten unter a) bezeichneten Radteil eingegossen wird.

15. Verfahren zur Herstellung eines Fahrzeugrades nach Anspruch 14, dadurch gekennzeichnet, dass zur Verminderung der infolge des Schwindens des einen gegossenen Radteiles (4, 13, 23, 33, 43 oder 62) des Fahrzeugrades (1, 10, 20, 30 oder 50) entstehenden Spannungen das andere, aus einem Strang- oder Walzenpressprofil hergestellte Radteil (3, 11, 27, 31, 41, 51, oder 52) des Fahrzeugrades vorgewärmt in die Gussform eingelegt wird.

16. Verfahren zur Herstellung eines Fahrzeugrades nach den Ansprüchen 14 und 15, dadurch gekennzeichnet, dass die gegossenen Radteile (4, 13, 23, 33, 43 oder 62) wie die Felge oder der Radkörper mit Hilfe des Kokillengussverfahrens gegossen werden.

17. Verfahren zur Herstellung eines Fahrzeugrades nach den Ansprüchen 14 und 15, dadurch gekennzeichnet, dass die gegossenen Radteile (4, 13, 23, 33, 43 oder 62) wie die Felge oder der Radkörper mit Hilfe des Niederdruckverfahrens gegossen werden.

18. Verfahren zur Herstellung eines Fahrzeugrades nach den Ansprüchen 14 und 15, dadurch gekennzeichnet, dass die gegossenen Radteile (4, 13, 23, 33, 43 oder 62) wie die Felge oder der Radkörper mit Hilfe des Druckgussverfahrens gegossen werden.

19. Verfahren zur Herstellung eines Fahrzeugrades nach den Ansprüchen 14 und 15, dadurch gekennzeichnet, dass die gegossenen Radteile (4, 13, 23, 33, 43 oder 62) wie die Felge oder der Radkörper mit Hilfe des Flüssigpress-Giessverfahrens gegossen werden.

20. Verfahren zur Herstellung eines Fahrzeugrades nach den Ansprüchen 14, 16, 17, 18 und 19, dadurch gekennzeichnet, dass durch geeignete Dimensionierung radialer Anschläge der Giessform die Felge (3, 12, 21, 42 und 53) während des Giessvorganges durch bestehenden hydrostatischen Druck aufgeweitet wird, um die durch das Schwinden des gegossenen Radteiles entstehenden Spannungen zu vermindern.

## Claims

1. Vehicle wheel (1, 10, 20, 30, 40 or 50) which consists of a wheel body (4, 13, 23, 31, 43 or 62) connected in shape-engaging manner with a rim (3, 12, 21, 33, 42 or 53) and serves for use for passenger cars, lorries or motor-propelled bicycles, characterised in that either the rim (3; 12, 21, 33, 42 or 53) or the wheel body (4, 13, 23, 31, 43 or 62) is formed from an extruded section or a rolled section and in that the other wheel part (wheel body or rim as the case may be) is cast thereto.

2. Vehicle wheel according to claim 1, characterized in that the rim (3, 12, 21, 42 or 53) has been produced from an extruded section (2, 11, 27, 41, 51 or 52) which possesses on one side at least one depression (5, 14, 24, 44, 54 and 57 or 58 and 59) of groove, from extending in the longitudinal direction.

3. Vehicle wheel according to claim 1, characterized in that the rim (3, 12, 21, 42 or 53) has been produced from a rolled material of strip from which possesses on one side at least one depression (5, 14, 24, 44, 54 and 57 or 58 and 59) of groove from extending in the longitudinal direction.

4. Vehicle wheel according to claim 2 or 3, characterized in that the depressions (5, 14, 24, 44, 54 and 57 or 58 and 59) of groove from possess undercuttings.

5. Vehicle wheel according to claim 2, characterized in that the extruded section serving for the production of the rim (3, 12, 21, 42 or 53) consists of a tough malleable metal, such as an aluminium alloy or a magnesium alloy.

6. Vehicle wheel according to claim 1, characterized in that the rim (33) has been produced from a cast metal.

7. Vehicle wheel according to claims 1 and 6, characterized in that the cast metal serving for the production of the rim (33) consists of an aluminium alloy or a magnesium alloy.

8. Vehicle wheel according to claim 1, characterized in that the wheel body (4, 13, 23, 43 and 62) consists of a cast metal.

9. Vehicle wheel according to claims 1 and 8, characterized in that the cast metal consists of an aluminium alloy or of a magnesium alloy.

10. Vehicle wheel according to claim 1, characterized in that the wheel body (31) of the vehicle wheel (30) consists of an extruded section.

11. Vehicle wheel according to claims 1 and 10, characterized in that the extruded section serving for the production of the wheel body (31) of the vehicle wheel (30) consists of a tough malleable metal, such as an aluminium alloy or a magnesium alloy.

12. Vehicle wheel according to claim 1, characterized in that in appropriate circumstances the gaps occurring between the walls of the depressions of the rim and the wheel body anchored in shape-engaging manner in the depressions, on shrinking of the cast wheel body (4, 13, 23, 43 and 62) are closed with an adhesive or sealing composition.

13. Vehicle wheel according to claims 1, 2 and 10, characterized in that both the wheel body (31 or 43) of the vehicle wheel (30 or 40) and rims (33 or 42) thereof can be produced from an extruded section.

14. Method for the production of a vehicle wheel according to claim 1, characterized in that

a) one of the two pre-fabricated wheel parts formed from an extruded section (2, 11, 27, 31, 41 or 52) or from a rolled section, such as the rim on the one hand and the wheel body on the other, is inserted into a casting mould, and in that

b) into a casting mould thus prepared a metal melt is poured for the production of the wheel part (4, 13, 23, 33, 43 or 62), such as the rim on the hand and the wheel body on the other, and for the connection of this second wheel part with the pre-fabricated wheel part designated under a).

15. Method for the production of a vehicle wheel according to claim 14, characterized in that for the reduction of the stresses occurring as a result of the shrinking of the one cast wheel part (4, 13, 23, 33, 43 or 62) of the vehicle wheel (1, 10, 20, 30 or 50) the other wheel part (3, 11, 27, 31, 41, 51 or 52) of the vehicle wheel, produced from an extruded or rolled section, is inserted in pre-heated condition into the casting mould.

16. Method for the production of a vehicle wheel according to claims 14 and 15, characterized in that the cast wheel parts (4, 13, 23, 33, 43 or 62) such as the rim or the wheel body are cast with the aid the chill casting method.

17. Method for the production of a vehicle wheel according to claims 14 and 15, characterized in that the cast wheel parts (4, 13, 23, 33, 43 or 62) such as the rim or the wheel body are cast with the aid of the low pressure method.

18. Method for the production of a vehicle wheel according to claims 14 and 15, characterized in that the cast wheel parts (4, 13, 23, 33, 43 or 62) such as the rim or the wheel body are cast with the aid of the die-casting method.

19. Method for the production of a vehicle wheel according to claims 14 and 15, characterized in that the cast wheel parts (4, 13, 23, 33, 43 or 62) such as the rim or the wheel body are cast with the aid of the hydraulic pressure casting method.

20. Method for the production of a vehicle wheel according to claims 14, 16, 17, 18 and 19, characterized in that by suitable dimensioning of radial stops of the casting mould the rim (3, 12, 21, 42 and 53) is expaned by persisting hydrostatic pressure during the casting operation in order to reduce the stresses occurring due to the shrinking of the cast wheel part.

**Revendications**

1. Roue (1, 10, 20, 30, 40 ou 50), constituée par un voile (4, 13, 23, 31, 43 ou 62) relié par sûreté de forme à une jante (3, 12, 21, 33, 42 ou 53), destinée à des voitures de tourisme, véhicules utilitaires ou deux-roues à moteur et caractérisée en ce que la jante (3, 12, 21, 33, 42 ou 53) ou le voile (4, 13, 23, 31, 43 ou 62) est formé à partir d'un profilé filé ou laminé, sur lequel l'autre pièce de la roue (voile ou jante) est moulée.

2. Roue selon revendication 1, caractérisée en ce que la jante (3, 12, 21, 42 ou 53) est fabriquée à partir d'un profilé filé (2, 11, 27, 41, 51 ou 52) qui présente sur un côté au moins un évidement en forme de gorge longitudinale (5, 14, 24, 44, 54, et 57 ou 58 et 59).

3. Roue selon revendication 1, caractérisée en ce que la jante (3, 12, 21, 42 ou 53) est fabriquée à partir d'un matériau laminé en bande, qui présente sur un côté au moins un évidement en forme de gorge longitudinale (5, 14, 24, 44, 54 et 57 ou 58 et 59).

4. Roue selon une des revendications 2 ou 3, caractérisée en ce que les évidements en forme de gorge (5, 14, 24, 44, 54 et 57 ou 58 et 59) présentent des contre-dépouilles.

5. Roue selon revendication 2, caractérisée en ce que le profilé filé servant à la fabrication de la jante (3, 12, 21, 42 ou 53) est constitué dans un métal forgeable tenace, tel qu'un alliage d'aluminium ou de magnésium.

6. Roue selon revendication 1, caractérisée par la fabrication de la jante (33) dans un métal moulé.

7. Roue selon revendications 1 et 6, caractérisée en ce que le métal moulé servant à la fabrication de la jante (33) est un alliage d'aluminium ou de magnésium.

8. Roue selon revendication 1, caractérisée en ce que le voile (4, 13, 23, 43 et 62) est réalisé dans un métal moulé.

9. Roue selon revendications 1 et 8, caractérisée en ce que le métal moulé est un alliage d'aluminium ou de magnésium.

10. Roue selon revendication 1, caractérisée en ce que le voile (31) de la roue (30) est constitué par un profilé filé.

11. Roue selon revendications 1 et 10, caractérisée en ce que le profilé filé servant à la fabrication du voile (31) de la rouge (30) est constitué par un métal forgeable tenace, tel qu'un alliage d'aluminium ou de magnésium.

12. Roue selon revendication 1, caractérisée en ce que les fissures éventuellement produites par le retrait du voile moulé (4, 13, 23, 43 et 62), entre les parois des creux de la jante et le voile ancré par sûreté de forme dans lesdits creux, sont obturées à l'aide d'une masse adhésive ou d'étanchéité.

13. Roue selon revendications 1, 2 et 10, caractérisée en ce que le voile (31 ou 43) de la roue (30 ou 40) et la jante (33 ou 42) de cette dernière peuvent être fabriqués à partir d'un profilé filé.

14. Procédé pour la fabrication d'une roue de véhicule selon revendication 1, caractérisée en ce que:

a) und des deux pièces préfabriqués de la roue, constituées par un profilé filé (2, 11, 27, 31, 41 ou 52) ou laminé, telles que la jante ou le voile, est introduite dans un moule, et

b) un métal fondu est versé dans un moule ainsi préparé pour fabriquer la pièce de roue (4, 13, 23, 43 ou 62), telle que la jante ou le voile, et relier cette seconde pièce à la pièce préfabriquée de la roue, désignée sous a).

15. Procédé pour la fabrication d'une roue de véhicule selon revendication 14, caractérisée en ce que pour réduire les contraintes produites par le retrait de la pièce moulée (4, 13, 23, 33, 43 ou 62) de la roue de véhicule (1, 10, 20, 30 ou 50), la seconde pièce (3, 11, 27, 31, 41, 51 ou 52) de la roue, fabriquée à partir d'un profilé filé ou laminé, est introduite après réchauffage dans le moule.

16. Procédé de fabrication d'une roue de véhicule selon revendications 14 et 15, caractérisé en ce que les pièces moulées (4, 13, 23, 33, 43 ou 62), telles que jante ou voile, sont moulées en coquille.

17. Procédé de fabrication d'une roue de véhicule selon revendications 14 et 15, caractérisé en ce que les pièces moulées (4, 13, 23, 33, 43 ou 62), telles que jante ou voile, sont moulées par le procédé basse pression.

18. Procédé de fabrication d'une roue de véhicule selon revendications 14 et 15, caractérisé en ce que les pièces moulées (4, 13, 23, 33, 43 ou 62), telles que jante ou voile, sont moulées sous pression.

19. Procédé de fabrication d'une roue de véhicule selon revendications 14 et 15, caractérisé en ce que les pièces moulées (4, 13, 23, 33, 43 ou 62), telles que jante ou voile, sont moulées par compression liquide.

20. Procédé de fabrication d'une roue de véhicule selon revendications 14, 16, 17, 18 et 19, caractérisé en ce que par un dimensionnement approprié de butées radiales du moule, la jante (3, 12, 21, 42 et 53) est évasée par la pression hydrostatique pendant le moulage, afin de réduire les contraintes produites par le retrait de la pièce moulée de la roue

Fig 1

Fig. 2

Fig. 3

Fig. 4

0017619

11

Fig. 5

Fig. 6

Fig. 7

Fig. 8

Fig. 9

— 40
— 42
— 43

Fig.10

41  45  44  46

Fig. 11

50

53

62

Fig.12

51  54  56    57  55

Fig.13

52  58   60   61   59